Europäisches Patentamt

European Patent Office

Office européen des brevets

(19)

(11) Veröffentlichungsnummer: **0 093 254**

**A2**

(12) # EUROPÄISCHE PATENTANMELDUNG

(21) Anmeldenummer: **83102640.6**

(22) Anmeldetag: **17.03.83**

(51) Int. Cl.³: **G 11 B 15/44**
      **G 11 B 15/02**

(30) Priorität: **03.05.82 DE 3216452**

(43) Veröffentlichungstag der Anmeldung:
      **09.11.83 Patentblatt 83/45**

(84) Benannte Vertragsstaaten:
      **AT CH FR GB IT LI SE**

(71) Anmelder: **Blaupunkt-Werke GmbH**
      **Robert-Bosch-Strasse 200**
      **D-3200 Hildesheim(DE)**

(72) Erfinder: **Diepholz, Tilo, Dipl.-Ing.**
      **Struckmannstrasse 7**
      **D-3200 Hildesheim(DE)**

(72) Erfinder: **Hapke, Walter**
      **Orleansstrasse 75e**
      **D-3200 Hildesheim(DE)**

(72) Erfinder: **Wöhl, Wilhelm**
      **Bahnhofstrasse 26**
      **D-3208 Giesen(DE)**

(72) Erfinder: **Schindler, H. Joachim**
      **Postweg 16**
      **D-3208 Giesen(DE)**

(74) Vertreter: **Eilers, Norbert, Dipl.-Phys.**
      **Blaupunkt-Werke GmbH Robert-Bosch-Strasse 200**
      **D-3200 Hildesheim(DE)**

(54) **Tonband-Kassettengerät mit einem in der Laufrichtung umschaltbaren Umkehr-Laufwerk.**

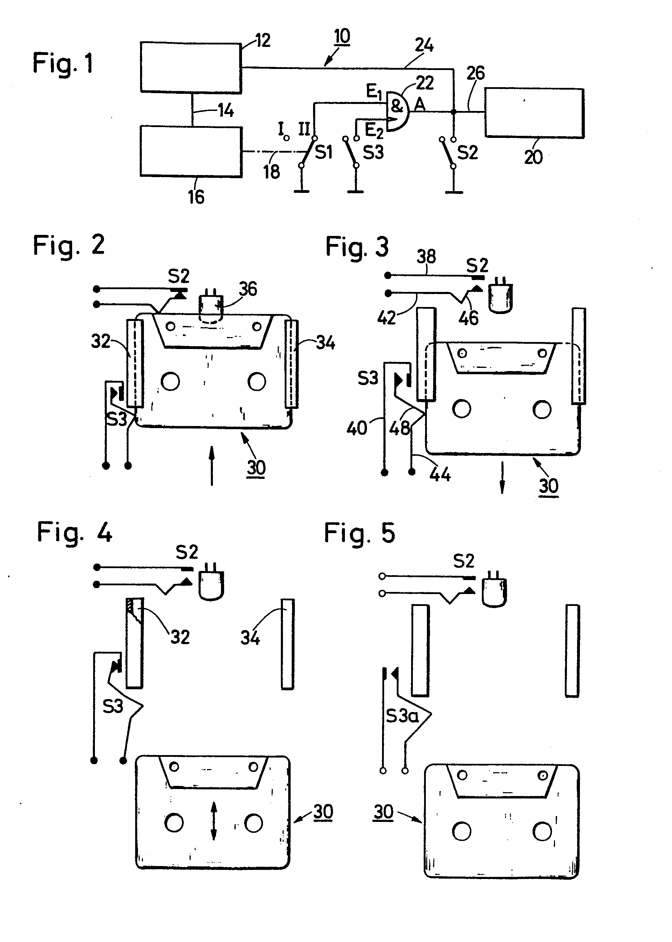

(57) In einem Tonband-Kassettengerät mit Umkehr-Laufwerk wird das Laufwerk in Abhängigkeit von der Stellung eines Laufrichtungsmelders und eines von einer eingelegten Kassette betätigbaren Vorrangschalters über eine Verknüpfungsschaltung bei Feststellung der einer festgelegten Vorzugsrichtung entgegengesetzten Laufrichtung vor Aufnahme des Spielbetriebes automatisch auf die bevorzugte Laufrichtung umgeschaltet (Fig. 1).

Fig. 1

EP 0 093 254 A2

Blaupunkt-Werke GmbH
Robert-Bosch-Str. 200

3200 Hildesheim

---

### Tonband-Kassettengerät mit einem in der Laufrichtung umschaltbaren Umkehr-Laufwerk

---

Tonbandgeräte mit Umkehr-Laufwerken für sog. Reverse- oder Autoreverse-Betrieb gestatten durch Umschaltung der Laufrichtung eines zwischen achsparallelen Bandspulen umlaufenden Tonbandes eine Umsteuerung von einer der einen Laufrichtung zugeordneten Bandspur auf eine der entgegengesetzten Laufrichtung zugeordnete Bandspur.

Die Umschaltung der Laufrichtung kann beispielsweise durch Tastenbetätigung an beliebiger Stelle des Bandes ausgelöst
werden und erfolgt bei Autoreverse-Betrieb am Bandende automatisch.

Solche Tonbandgeräte sind unter anderem in Form sog. Kassetten-Decks als Heimgeräte oder als Einbaulaufwerke in
kombinierten Autoradio-Kassettengeräten bekannt.

Bekannte Reverse-Laufwerke arbeiten in der Weise, daß bei
einem Kassettenwechsel die zuletzt für das Abspielen der
gerade entnommenen Kassette eingestellte Bandlaufrichtung
erhalten bleibt. Deshalb kann es mit 50 %iger Wahrscheinlichkeit vorkommen, daß bei einem Kassettenwechsel zuerst
nicht die vom Benutzer gewünschte oder erwartete Bandspur,
sondern die entgegengesetzte Bandspur abgespielt wird.
Manchmal wird dies erst nach einiger Zeit erkannt. Der Benutzer ist dann gezwungen, das Band wieder zurückzuspulen
und die Reverse-Taste zu betätigen oder die Kassette umzudrehen.

Dies wird vor allem deshalb als störend empfunden, weil
der Benutzer, der eine Kassette in einer gerätespezifisch bestimmten Weise einlegt, erwartet, daß zunächst z.B.
die der beim Einlegen sichtbaren Kassettenseite zugeordnete Bandspur abgespielt wird.

Um diesen grundsätzlichen Nachteil bekannter Umkehr-Laufwerke auszuschalten, liegt der Erfindung die Aufgabe zugrunde, ein Tonbandgerät mit Umkehr-Laufwerk und ein Verfahren zu schaffen, die für den Benutzer sicherstellen,
daß bei einem Kassettenwechsel, unabhängig von der zuletzt
für die entnommene Kassette eingestellten Laufrichtung
eine entsprechend der Bedienungsvorschrift neu eingelegte
Kassette beim Einschalten des Aufnahme- oder Wiedergabebetriebes in der aufgrund der bei Einhaltung der Benutzungsvorschrift erwarteten Laufrichtung bespielt oder abgehört
wird.

Ausgehend vom Oberbegriff des Anspruches 1, wird ein Tonbandgerät zur Lösung dieser Aufgabe gemäß Kennzeichen des
Anspruches 1 ausgeführt.

Ausgestaltungen und Weiterbildungen des erfindungsgemäßen
Tonbandgerätes sind in den Ansprüchen 2 bis 9 angegeben.

Diese Geräteausführungen sind bevorzugte Verwirklichungen
eines erfindungsgemäßen Verfahrens zur zwingenden Einschaltung einer bestimmten Vorzugslaufrichtung für den Betrieb
einer neu eingegebenen Kassette.

Hauptmerkmal eines erfindungsgemäßen Kassettengerätes ist
ein im folgenden als Vorrangschalter bezeichneter, zu einer
Steuerschaltung gehörender Schalter mit zwei Schaltzuständen bzw. Schaltstellungen. Dieser Schalter ist so in der Kassettenaufnahmevorrichtung angeordnet, daß er durch eine eingelegte bzw. eingeschobene Kassette betätigt werden kann.
Die Kassette ist also ein Schaltbetätigungsglied, durch
welches der Vorrangschalter aus seinem bei entnommener Kassette eingenommenen Schaltzustand in seinen anderen Schaltzustand gebracht wird.

Die Erfindung hat also den Vorteil, daß nach Eingabe einer
Kassette in ein Umkehr-Laufwerk eine bestimmte, vorzugsweise der oberen Kassettenseite zugeordnete Laufrichtung
für den Betrieb vorgegeben wird, und zwar unabhängig davon,
welche Laufrichtung bei der letzten Benutzung geschaltet
war.

Die Erfindung berücksichtigt dabei die bei Umkehr-Laufwerken eine Kassette
bekannte Funktionsweise, die es gestattet,/ beim Abschalten
des Gerätes oder durch Drücken einer Auswurftaste (Eject)
in eine auch als Parkposition bezeichnete Zwischenstellung
in der Kassetten-Aufnahmevorrichtung zu bringen, in welcher
der Kassettenbetrieb unterbrochen ist, um beispielsweise
Rundfunknachrichten zu hören. Aus dieser Zwischenstellung
kann die Kassette bei einem gewünschten Kassettenwechsel
aus dem Gerät entnommen oder wieder in ihre Spielstellung
zurückbewegt werden.

Die Erfindung ist deshalb so ausgeführt, daß die Zwangsschaltung der Vorzugslaufrichtung nur erfolgt, wenn eine
Kassette dem Gerät völlig entnommen und dieselbe oder eine
andere Kassette wieder in das Gerät eingelegt oder eingeschoben wurde. Die Schaltung der Vorzugsrichtung erfolgt
aber nicht, wenn die Kassette nach Unterbrechung des Kassettenprogrammes aus ihrer Zwischen- oder Parkposition
wieder in die Abspielposition bewegt wird. In diesem Fall
bleibt die zuletzt geschaltete Laufrichtung für die Fortsetzung des Kassettenprogrammes erhalten.

Weitere Vorzüge und Merkmale der Erfindung ergeben sich aus
der nachfolgenden Beschreibung und der Zeichnung, in welchen
die Erfindung näher erläutert und dargestellt ist. Es
zeigen:

Fig. 1      ein schematisch vereinfachtes Blockschaltbild
            des prinzipiellen Aufbaus eines erfindungsgemäßen
            Tonbandkassettengerätes mit den für das Verständnis der Erfindung wesentlichen Teilen eines
            Umkehr-Laufwerkes mit selbsttätiger Schaltung
            einer Vorzugslaufrichtung,

Fig. 2      schematisch vereinfachte Darstellungen der aus
bis 4       einem Einschubschacht bestehenden Kassetten-Auf-
            nahmevorrichtung eines erfindungsgemäßen Tonband-
            gerätes mit verschiedenen Schaltstellungen im Einschubschacht angeordneter, durch eine eingeschobene Kassette betätigbarer Schalter und

Fig. 5   eine der Fig. 4 entsprechende Darstellung mit
einer anderen Ausgangsstellung des Vorrangschalters bei leerem Einschubschacht.

Ein in Fig. 1 als vereinfachtes Blockschaltbild dargestellter Ausschnitt eines Tonband-Kassettengerätes 10 mit
Umkehr-Laufwerk zeigt einen Laufrichtungsumschalter 12,
dessen Ausgang über eine Steuerleitung 14 an eine elektrisch
auslösbare mechanische Stellvorrichtung 16 für die Laufwerkumschaltung angeschlossen ist. Die Stellvorrichtung 16 ist
über eine mit 18 angedeutete mechanische Verbindung mit
einem aus einem Schalter bestehenden Laufrichtungsmelder S1
gekuppelt, dessen Schaltstellungen I und II jeweils einer
der entgegengesetzten Laufrichtungen entsprechen.

Der Laufrichtungsmelder S1 dient also zur Feststellung bzw.
zur Anzeige der jeweils eingeschalteten Laufrichtung bzw.
der in der jeweiligen Laufrichtung abgespielten Bandspur
einer in das Gerät eingelegten Kassette.

Ein in dem Gerät 10 vorhandener Motorschaltkreis zur Laufrichtungsabhängigen Drehrichtungsumschaltung eines Laufwerkmotors für den Bandantrieb ist durch einen Block 20 angedeutet. Der Motorschaltkreis 20 kann je nach Schaltungsausführung beispielsweise über die Ausgangsleitung 14 des
Laufrichtungsumschalters 12 oder gemäß Fig. 1 über den
Laufrichtungsmelder S1 umgesteuert werden.

In bisher üblichen Geräten erfolgt die Laufwerkumsteuerung
auf entgegengesetzte Bandlaufrichtungen mittels eines durch
Betätigen einer nicht gezeigten Reversetaste oder automatisch am jeweiligen Bandende ausgelösten Schaltsignales
für den Laufrichtungsumschalter 12. Beim Eintreffen eines solchen Schaltsignales erscheint am Ausgang 14 des beispielsweise aus einer Elektronikschaltung bestehenden
Laufrichtungsumschalters 12 ein Steuerimpuls für die Auslösung der Umschaltung der beispielsweise elektromechanisch
oder elektromagnetisch arbeitenden Stellvorrichtung 16
und des Motorschaltkreises 20.

Ein durch eine in dem Gerät 10 in ihre Spielposition bewegte Kassette betätigbarer Schalter S2, der auch als Kassetten- oder Betriebsschalter bezeichnet wird, ist mit dem
Motorschaltkreis 20 verbunden. Der Schalter S2 dient zur
Einschaltung des Motor-Stromkreises mittels für verschiedene Geräteausführungen bekannter Stellvorrichtungen zur
Herstellung des Betriebseingriffes der Antriebsmittel
für das an einem Tonkopf vorbeibewegte Tonband und die
Wickelteller einer in das Gerät 10 eingelegten Kassette.

Zur automatischen Zwangseinstellung einer festgelegten
Vorzugslaufrichtung ist das Gerät 10 erfindungsgemäß mit
einem durch eine eingelegte Kassette betätigbaren Vorrangschalter S3 ausgerüstet und besitzt eine Verknüpfungsschaltung 22, beispielsweise ein UND-Gatter mit einem statischen
Eingang E1 und einem dynamischen Eingang E2. Bei dem gezeigten Ausführungsbeispiel liegt der Laufrichtungsmelder
S1 zwischen Masse und dem statischen Eingang E1 des UND-
Gatters 22 und der Vorrangschalter S3 zwischen Masse und
dem dynamischen Eingang E2.

Der Ausgang A der Verknüpfungslogik 22 ist über Steuerleitungszweige 24 bzw. 26 an Steuereingänge des Laufrichtungsumschalters 12 und des Motorschaltkreises 20
angeschlossen.

Fig. 2 bis 4 zeigen schematisch vereinfacht eine Möglichkeit der räumlichen Anordnung der durch eine in das Gerät 10 eingelegte Kassette 30 betätigbaren Schalter S2 und S3 in einer Kassetten-Aufnahmevorrichtung, z. B. einem Einschubschacht, der durch parallel gegenüberliegende, einander zugekehrte, U-förmige Führungsschienen 32 und 34 angedeutet ist. Der Einschubschacht 32, 34 besitzt an seinem in der Darstellung unteren Ende eine Einschuböffnung für eine Kassette, die mit ihrem Stirnende vorausgehend in das Gerät eingeschoben wird.

Der Betriebsschalter S2 befindet sich an dem der Einschuböffnung entgegengesetzten, in der Zeichnung oberen Ende des Kassetten-Einschubschachtes 32, 34, wo neben anderen, nicht gezeigten Laufwerkteilen, beispielsweise Gummiandruckrollen der für die entgegengesetzten Laufrichtungen vorhandenen Tonwellenantriebe, auch wenigstens ein Tonkopf 36 angeordnet ist.

Der Vorrangschalter S3 befindet sich an einer Längsseite des Kassetten-Schachtes.

Beide Schalter S2 und S3 besitzen bei dem gezeigten Ausführungsbeispiel eine im wesentlichen gerätefeste Kontaktfeder 38 bzw. 40 und eine bewegliche Kontaktfeder 42 bzw. 44 mit einem in den Bewegungsweg der Kassette 30 im Schacht 32, 34 vorstehenden, beispielsweise durch eine Ausknickung gebildeten Betätigungsstück 46 bzw. 48.

Bei dem in Fig. 2 bis 4 gezeigten Beispiel ist der Betriebsschalter S2 in seiner nicht durch die Kassette betätigten Ausgangslage geöffnet, während der Vorrangsschalter S3 in der nicht betätigten Ausgangslage geschlossen ist, siehe Fig. 4.

Fig. 5 zeigt als Beispiel für mögliche Abwandlungen eine
Schaltungsausführung, bei der sowohl der Betriebsschalter
S2 als auch der hier mit S3a bezeichnete Vorrangschalter
in ihrer unbetätigten Ausgangsstellung geöffnet sind.

Die Verknüpfungsschaltung 22 gemäß Fig. 1 ist entsprechend
den gezeigten Abwandlungen so ausgeführt, daß bei einer
Schalteranordnung gemäß Fig. 2 bis 4 ein Durchschaltimpuls
beim Öffnen des Schalters S3 und bei einer Schalteranordnung gemäß Fig. 5 beim Schließen des Schalters S3a am dynamischen Eingang E2 des UND-Gatters erscheint. Am Eingang E1
der Verknüpfungsschaltung 22 liegt ein Eingangssignal immer
dann an, wenn sich der Laufrichtungsmelder S1 in seiner
Schaltstellung II befindet.

Die ausgewählte Vorzugslaufrichtung entspricht bei der
hier gezeigten Schaltungsanordnung der Schalterstellung I
des Laufrichtungsmelders S1, die jeweils der gemäß Fig.2
bis 5 sichtbaren Oberseite zugeordneten Bandspur einer
eingeschobenen Kassette 30 entspricht.

Wird eine Kassette in den leeren Aufnahmeschacht 32, 34
eingeschoben, siehe Fig. 4 oder 5, wird der Vorrangschalter S3 betätigt, so daß am dynamischen Eingang E2 des UND-
Gatters 22 ein Eingangsimpuls erscheint. Befindet sich der
Laufrichtungsmelder in seiner der Vorzugslaufrichtung I
entgegengesetzten Schaltstellung II, siehe Fig. 1, liegt
auch am Eingang E1 der UND-Schaltung 22 ein Eingangssignal.

In diesem Fall erscheint am Ausgang A des UND-Gatters ein
Ausgangssignal, welches über die Steuerleitungen 24 und 26
die Laufrichtungsumschaltung der Laufwerkteile 12, 16 und 20
auslöst.

Bei dieser Umschaltung bringt die Stellvorrichtung 16 den Laufrichtungsmelder S1 in seine der jetzt eingestellten Vorzugslaufrichtung entsprechende Schaltstellung I.

Durch die in ihre eingeschobene Endstellung gemäß Fig. 2
weiterbewegte Kassette 30 wird dann der Schalter S2 geschlossen und damit der Spielbetrieb in der automatisch
eingestellten Vorzugslaufrichtung aufgenommen.

Wird jetzt die Kassette z.B. durch Betätigen der Auswurftaste in ihre in Fig. 30 gezeigte Zwischenstellung bewegt,
wird der Spielbetrieb durch Öffnen des Schalters S2 unterbrochen.

Der Vorrangschalter S3 bleibt jedoch in seiner von der Kassette 30 betätigten Öffnungsstellung, so daß am dynamischen
Eingang E2 der Verknüpfungsschaltung 22 kein Eingangssignal
erscheint.

Dies ist auch dann der Fall, wenn vorher durch Betätigen der
Reverse-Taste das Laufwerk und damit der Laufrichtungsmelder S1 in die durch dessen Schaltstellung II angezeigte,
der Vorzugslaufrichtung entgegengesetzte Laufrichtung umgeschaltet worden ist.

Die eingestellte Laufrichtung bleibt also erhalten, wenn
die Kassette 30 aus der in Fig. 3 gezeigten Parkposition
nicht aus dem Kassettenschacht 32, 34 entnommen, sondern
wieder in die in Fig. 2 gezeigte Spielposition zurückbewegt
wird.

Die Schaltung der Vorzugsrichtung wird also in Abhängigkeit
von der Stellung des Laufrichtungsmelders S1 nur nach völliger Entnahme der Kassette 30, siehe Fig. 4, beim Einlegen
einer neuen Kassette ausgelöst, sofern die Vorzugsrichtung
nicht bereits eingestellt ist.

Für den Fall, daß das Laufwerk beim Einlegen einer neuen
Kassette schon auf die Vorzugslaufrichtung eingestellt ist,
befindet sich nämlich der Laufrichtungsmelder S1 in seiner
der Vorzugslaufrichtung entsprechenden Position I, so daß
keine Laufrichtungsumschaltung ausgelöst wird.

Das vorstehend erläuterte Arbeitsverfahren zur Schaltung
einer Vorzugsrichtung kann auch mit gegenüber Fig. 1 abgewandelten Schaltungsanordnungen verwirklicht werden, ohne
das erfindungsgemäße Schaltungsprinzip zu verlassen.

So ist es beispielsweise möglich, den Laufrichtungsmelder
S1 wieder an einen Eingang und den Vorrangschalter S3 über
einen Zwischenspeicher an den anderen Eingang der z.B. aus
einem einfachen UND-Glied mit statischen Eingängen bestehenden Verknüpfungsschaltung 22 anzuschließen, um die
gleiche Schaltfunktion zu erzielen. Dabei wird der bei Entnahme einer Kassette ansprechende Zwischenspeicher für den
bei eingelegter Kassette eingenommenen Schaltzustand des
Vorrangschalters S3 z.B. mittels eines vom Betriebsschalter
S2 kommenden Signales gelöscht, sobald der Betriebsschalter
durch eine neu eingelegte Kassette betätigt wird.

Ferner kann im Rahmen der Erfindung eine Verknüpfungsschaltung mit drei gesonderten Eingängen für den Laufrichtungsmelder S1, den Vorrangschalter S3 sowie den Betriebsschalter S2 eingesetzt werden.

Welcher Schaltungsausführung der Vorzug gegeben wird,
hängt im wesentlichen vom Aufbau bzw. der Grundschaltung
des jeweiligen Gerätes ab, welches mit der Erfindung ausgestattet werden soll.

A n s p r ü c h e

<u>A n s p r ü c h e :</u>

1. Tonbandkassetten-Gerät mit einem in der Laufrichtung umschaltbaren Umkehr-Laufwerk, einem von einer Stellvorrichtung für die über einen Steuerkreis auslösbare Laufwerkumschaltung betätigten Laufrichtungsmelder und mit
   einer Aufnahmevorrichtung für Einzelkassetten, die aus
   einer Zwischenstellung in der Aufnahmevorrichtung wahlweise in eine Endstellung für Aufnahme- oder Wiedergabebetrieb bewegbar oder für einen Kassettenwechsel aus dem
   Gerät entnehmbar sind, dadurch gekennzeichnet, daß in
   der Kassetten-Aufnahmevorrichtung (32, 34) ein auf das
   Vorhandensein einer in ihrer End- oder Zwischenstellung
   befindlichen Kassette (30) ansprechender Vorrangschalter
   (S3) zur automatischen Schaltung einer bevorzugten Laufrichtung angeordnet ist, daß der Vorrangschalter und der
   aus einem Schalter bestehende Laufrichtungsmelder (S1)
   über eine Verknüpfungsschaltung (22) am Eingang des
   Steuerkreises (12, 20) für die Laufwerkumschaltung liegen, wobei ein Steuersignal am Ausgang der Verknüpfungsschaltung nur erscheint, wenn sich der Laufrichtungsmelder bei leerer Aufnahmevorrichtung in seiner der Vorzugslaufrichtung entgegengesetzten Schaltstellung (II)
   befindet und eine neu eingegebene Kassette den Vorrangschalter aus seiner bei entnommener Kassette eingenommenen Schaltstellung in die entgegengesetzte Schaltstellung umschaltet.

2. Gerät nach Anspruch 1, gekennzeichnet durch ein UND-Glied
   als Verknüpfungsschaltung (22).

3. Gerät nach Anspruch 1 oder 2, dadurch gekennzeichnet,
   daß der Laufrichtungsmelder (S1) an einem statischen

Eingang (E1) und der Vorrangschalter (S3) an einem dynamischen Eingang (E2) der Verknüpfungsschaltung (22) liegt.

4. Gerät nach Anspruch 1 oder 2, gekennzeichnet durch eine Verknüpfungsschaltung mit statischen Eingängen für den Laufrichtungsmelder (S1) und den über ein Speicherglied angeschlossenen Vorrangschalter (S3).

5. Gerät nach einem der vorhergehenden Ansprüche, dadurch gekennzeichnet, daß in der Kassetten-Aufnahmevorrichtung (32, 34) ein durch eine in ihrer Endstellung bewegte Kassette (30) zur Aufnahme des Betriebes betätigter Betriebsschalter (S2) angeordnet ist.

6. Gerät nach einem der vorhergehenden Ansprüche, dadurch gekennzeichnet, daß der Betriebsschalter (S2) an einem weiteren Eingang der Verknüpfungsschaltung (22) liegt.

7. Gerät nach einem der vorhergehenden Ansprüche, dadurch gekennzeichnet, daß der Vorrangschalter (S3) in der aus einem Einschubschacht (32, 34) bestehenden Kassettenaufnahmevorrichtung kurz hinter der Einschuböffnung des Schachtes angeordnet ist.

8. Gerät nach einem oder mehreren der vorhergehenden Ansprüche, dadurch gekennzeichnet, daß die im Einschubschacht (32, 34) angeordneten Schalter eine Kontaktfeder (42) mit einem in den Bewegungsweg einer in dem Einschubschacht befindlichen Kassette vorspringenden Betätigungsstück (46) aufweist.

9. Gerät nach einem der Ansprüche 1 bis 8, dadurch gekennzeichnet, daß die im Einschubschacht angeordneten

- 13 -

Schalter im Bewegungsweg einer Kassette liegende, optoelektrische Schalter sind.

10. Verfahren zur Umsteuerung eines Umkehr-Laufwerkes eines
    Tonbandkassetten-Gerätes von einer der einen Laufrichtung
    zugeordneten Bandspur auf eine der entgegengesetzten Laufrichtung zugeordnete Bandspur mit einem von einer Stellvorrichtung entsprechend der jeweiligen Laufrichtung ge-
    schalteten Laufrichtungsmelder und einer Aufnahmevor-
    richtung für Einzelkassetten, die aus einer Zwischenstellung in der Aufnahmevorrichtung wahlweise in eine
    Endstellung für Aufnahme- oder Wiedergabebetrieb bewegbar
    oder für einen Kassettenwechsel aus dem Gerät entnehmbar
    sind, dadurch gekennzeichnet, daß eine bevorzugte Laufrichtung festgelegt wird und daß bei Eingabe einer Kassette in die leere Aufnahmevorrichtung die Stellung des
    Laufrichtungsmelders geprüft und das Laufwerk vor Aufnahme des Spielbetriebes bei Feststellung der entgegengesetzten Laufrichtung auf die bevorzugte Laufrichtung
    umgeschaltet wird, während bei Bewegung einer in der Aufnahmevorrichtung befindlichen Kassette zwischen ihrer
    End- und Zwischenstellung die jeweils eingestellte Lauf-
    richtung beibehalten wird.

Fig. 1

Fig. 2

Fig. 3

Fig. 4

Fig. 5